# EUROPEAN PATENT SPECIFICATION

(11) **EP 1 282 530 B1**
(45) Date of publication and mention of the grant of the patent: **23.03.2011**
(21) Application number: 00981123.3
(22) Date of filing: 11.12.2000
(51) Int. Cl.: B60C 19/00, F16F 15/36

(54) **TIRE BALANCING USING COATED BEADS**
REIFENAUSWUCHTEN MIT BESCHICHTETEN KUGELN
EQUILIBRAGE DE PNEUS AU MOYEN DE TALONS REVETUS

(30) Priority: 13.03.2000 US 188708 P
(43) Date of publication of application: 12.02.2003
(73) Proprietor: Leblanc, Roger, Georgetown, Ontario L7G 4S4 (CA)
(72) Inventor: Leblanc, Roger, Georgetown, Ontario L7G 4S4 (CA)
(74) Representative: GROSSE SCHUMACHER KNAUER VON HIRSCHHAUSEN
(86) International application number: PCT/CA2000/001488
(87) International publication number: WO 2001/068387

(56) References cited:
- WO-A-00/68002
- WO-A-00/68008
- WO-A-00/68658
- CA-A- 2 216 744
- US-A- 4 179 162
- US-A- 5 766 501

## Description

### BACKGROUND OF THE INVENTION

### TECHNICAL FIELD

This invention relates to materials used to balance tires, and especially to balancing materials which attain a controlled amount of static electricity charge during use of the tire (whilst rubbing against the inner liner of the tire).

### BACKGROUND ART

Tire balance is important for vehicle ride and stability and for customer satisfaction as well. Tires, wheels, rims, brake drums, rotors and hubs are all manufactured to a close tolerance for roundness, shape and balance. Nevertheless, by assembling all these tolerances together, the probability of this assembly being out of balance is high. Wheel imbalance causes forces that result in vibration through the vehicle's steering, suspension and body. Imbalance is the cause of the majority of vibration complaints.

One method of solving tire imbalance is to use a free-flowing balancing material within the imbalanced tire. The material is first introduced at mounting of a tire on a rim or into an already mounted tire. The tire retains proper balance simply because the free-flowing material, the minuscule individual elements making up the material, inside the tire are distributed by centripetal forces generated when the wheel is rotating in such a way that they even out the heavy spot or heavy side in the tire assembly. Glycol and fibres were first used about thirty years ago.

In the case of a rotating tire and wheel, a heavy spot creates a force away from the tire, but because it is anchored by the axle, an opposite force is created within the tire as the forces flex the suspension. This will draw a sufficient quantity of the balancing material in the direction of the opposite force until the heavy spot is neutralized. In currently available material, the remaining balancing material spreads itself evenly around the inside of the tire, the material then remains in place held by the centripetal forces which press the material against the inside of the tire (the liner of the tire). When the vehicle stops, the conventional material falls away from its neutralizing position on the liner and falls to the bottom of the tire, and returns to a neutralizing position when the vehicle recommences motion at highway speeds. Therefore, the whole process of re-balancing must recommence after every stop, and a certain vibration will be felt in the vehicle before the balancing is completed once more.

U.S. Patent No. 5,766,501 to Heffernan et al. is one such traditional balancing material that works in the conventional manner described above. In this disclosure, Heffernan teaches a balancing material having a composition to reduce friction of the overall balancing material to ensure the material retains free-flowing characteristics when installed into a tire. The composition disclosed therein still, however, has some apparent drawbacks. Unfortunately, the constant "on the liner" and "off the liner" motion of conventional balancing materials causes problems; for instance, some of the currently available balancing materials deteriorate through this constant "on"-"off' motion into dust particles. This deterioration, in tum, causes mounting and dismounting problems for tire installers as the resulting dust is undesirable, because the dust leaves a coat on the wheel and the tire mounting surface. Further still, the dust may clog the tire valve seat thereby possibly causing an air leak. The end result is that conventional balancing materials do not produce a constantly balanced tire, as they have to recommence the re-balancing process after every stop. During the gradual time the material is relocating to or from the balancing positions, the tire is out of balance and vibration is induced.

US Patent No. 4,179,162 (Zarlengo) discloses another such system for dynamically and automatically balancing vehicle tires by means of loose mobile mass elements positioned within the tire of a wheel-tire assembly.

Another problem with currently available balancing materials, is that the materials may be abrasive in nature. The abrasive characteristic of currently available materials along with the on and off the liner action of the materials causes undesirable wearing down from the inside of the tire.

The absorption of moisture is another problem facing currently available materials. When the material absorbs moisture, the material tends to clump together. As a result of this moisture clumping, conventional materials tend not to position themselves in correct neutralizing/counterbalancing positions, or only partly achieving the correct positions, because the material cannot easily divide out for the balancing.

Further still, another problem encountered with some currently available materials, is that they sometimes react with the wheel material. One such traditional material has brass tracings that may react with aluminum wheels.

A tire balancing material made of glass beads, either alone or in combination with small amounts (up to about 1% by volume) of lubricant, is disclosed in US 6,128;952 (LeBlanc). The lubricant is preferably silicone. When a tire is inflated and is set in motion the glass beads migrate within the tire so as to balance any imbalance in the tire. It is the inventors belief that, after installation and during the initial rotations of the tire, the glass beads will charge by tribo-electrification or contact electrification during contact between the glass beads and the rubber of the tire. Because of the conductivity of the rubber, any charge on the tire will be quickly dissipated. However, because of the high surface resistivity of the glass beads, the charge will remain on the glass beads for long periods of time. The result is that the glass beads cling against the lining of the tire at the neutralizing balanced positions. This overall clinging effect is referred as "electrostatic cling". The glass beads do not disengage from the lining whenever the tire stops motion, because of the force between the charge on the beads and an opposite induced force in the rubber of the tire. When the tire is dismounted the glass beads remain flush against the lining. When the installer strikes the tire or brushes the beads out of the tire or a sudden shock is felt by the tire, then only will the glass beads disengage from the lining and fall free.

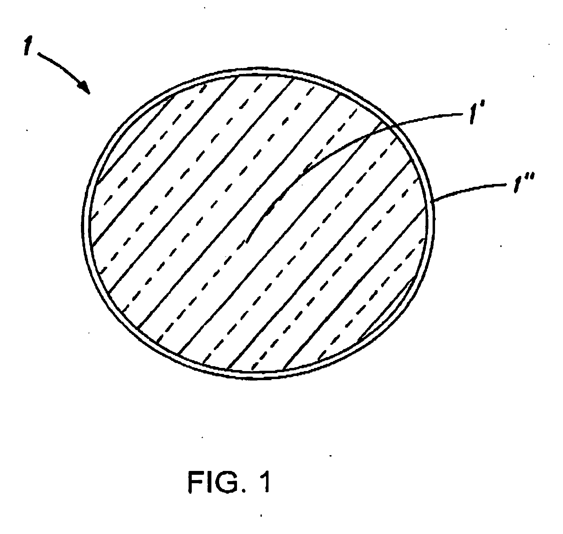

Although this balancing material works, the lubricant has a tendency to wear off the glass beads after a time, for example due to abrasion against the tire and centrifuging off by g-forces. The lubricant is also evaporated off the beads, due to the higher temperatures reached inside the tire during use. Fig. 1 shows a partial triboelectric series listing of materials, starting with materials that acquire a positive electric charge when contacted with other materials, and ending with materials which acquire a negative electric charge when contacted with other materials. Going down from the first material in the list, each material charges increasingly more negative, and a material which follows below another material in the list also charges relatively more negative than the "earlier" material. As is shown in Fig. 1, the known glass beads, used to balance larger tires, charge positive, i.e. they acquire a positive electric charge when they rub against the tire. Equally apparent from Fig. 1 is that the rubber material of the inner lining of a typical tire will charge more negative than the glass beads. It is thus believed that there is created an attraction force between the beads and the liner, greatercharge translating into a greater force. When the amount of lubricant decreases, as explained above, the amount of electrostatic cling between the beads and the tire liner increases. The free-flowing property of the bead material is deteriorating to a drier material, which clings easier to the tire. Thus, the amount of electrostatic cling produced by a balancing material according to this prior art is ideal for truck tires, but is too large for certain tire balancing applications, as will be described in more detail later.

Therefore, there exists a need to provide an alternative balancing material to overcome at least some of the drawbacks of currently available tire balancing materials.

### DISCLOSURE OF INVENTION

The known balancing material, having glass beads with a possible addition of lubricant, works satisfactorily in its designated application: truck tire balancing. In a truck, the suspension is designed to support heavy loads and stresses, and not primarily to provide a soft ride for the driver and other occupants of the passenger compartment. There are frequent occasions, at low vehicle speed, when the tires are subjected to rather hard impacts, which can dislodge any tire balancing material which is not clinging hard to the inner liner of the tire. The impacts make it easier for the balancing material to flow back into a position in which the tire is balanced, after the material has been , dislodged. The amount of cling between the beads and the Inner liner of the tire is too strong for the material to be used successfully in all automobile tire applications (smaller diameter tires), where the centripetal force is much higher than for large diameter tires, and the suspension is designed primarily to soften the ride for the passengers, as well as provide suitable road holding for the vehicle, and there are fewer and much softer impacts on the tire/wheel combination. An average passenger car tire will be subjected to approximately 320 G at 60 mph (96.5 km per hour), whilst a medium truck tire is subjected to approximately 160 G at the same vehicle speed. This makes it harder to readjust and distribute the balancing material in the tire, due to the larger G-forces that have to be overcome. If the balancing material clings too strongly to the tire liner, the material will not be able to flow freely enough to roll to the imbalance location, and the balancing will take longer to be accomplished. Thus, the electrostatic cling between the beads and the tire will have to be regulated and optimised, using a more permanent solution than the suggested addition of a lubricant. The ideal balancing material would balance the tire once, and then cling to this position until it is either dislodged by an unusually large impact at low speed on the tire or when a further imbalance of the tire occurs.

The inventor has found that a balancing material can be made using materials consisting of a material chosen from the more positive end of the triboelectric series, having a coating of a material chosen from the more negative end of the triboelectric series. In this way, the amount of static electricity charge of the balancing material can be regulated, by varying the coating layer thickness, the material used for the coating and the diameter of the more positive material (the bead). Thus, an optimized material can be produced, having the appropriate static electricity charging characteristic for any given tire size and application.

It is thus an object of the invention to overcome at least some of the drawbacks of the currently available balancing materials by providing a balancing material which can be given the appropriate static electricity charging characteristic for any given tire size and application.

It is another object of the invention to provide a balancing material having little moisture absorption characteristics.

It is another object of the invention to provide a balancing material having low deterioration characteristics, to minimize the dust production inside the tire.

It is another object of the invention to provide a balancing material having a non-abrasive characteristics when in use within a tire.

It is another object of the invention to provide a balancing material not having an adverse reaction to contact with metal or rubber.

According to the present invention, a vehicle tire balancing material comprises beads formed from a first material having a lower tribo-electric work function, wherein the beads have a permanent coating formed from a second material having a higher tribo-electric work function as set out in claims 1 and 19 which define a method and a material for balancing tires, respectively.

The first material is preferably selected from the group of glass (quartz), nylon, acetate, lead, aluminum and steel.

The first material is most preferably glass (quertz).

The second material is preferably selected from the group of silicon rubber, Silene, Teflon, Silicone, KELF, PVC,Polypropylene, Polyethylene, Polyurethane, Saran, Acrylic, Orion, Styrene, Celluloid Polyester, Acetate, Rayon, steel, nickel, copper and brass.

The second material is more preferably selected from the group of Silene. Teflon, and Silicone.

In one embodiment of the Invention, the second material is Teflon.

In a further embodiment of the Invention, the second material is Silicone.

In still a further embodiment of the Invention, the second material is Silane,

Advantageously, the beads are rounded and generally spherical In shape.

Preferably, the beads are In the range between 25 to 45 thousands of an inch (0.64 to 1.15 mm) In diameter.

According to a first embodiment of the invention, a method of correcting the imbalance in a wheel assembly comprises the steps:
(a) injecting a desired amount of a vehicle tire balancing material comprising beads formed from a first material having a lower tribo-electric work function, the beads having a permanent coating formed from a second material having a higher tribo-electric work function into the hollow interior of a stationary tire mounted to a wheel rim,
(b) pressurizing the air In the tire to a desired level,
(c) setting in motion the tire, causing the tire balancing material to migrate within the interior of the tire and to generally come to a stop on the lining of the tire at a position or positions so as to counterbalance the imbalance in the wheel assembly and remaining at those positions by electrostatic cling.

According to a second embodiment of the invention, a method of correcting the imbalance in a wheel assembly comprises the steps:
(a) introducing a predetermined amount of a vehicle tire balancing material comprising beads formed from a first material having a lower tribo-electric work ; function the beads having a permanent coating formed from a second material having a higher tribo-electric work function into the tire well of an unmounted stationary tire,
(b) mounting the tire,
(c) pressurizing the air in the tire to a desired level, and
(d) setting in motion the tire, whereby the tire balancing material migrates within the interior of the tire and comes to a stop on the lining of the tire at a position or positions so as to counterbalance the imbalance in the wheel assembly.

According to a third embodiment of the invention, a method of correcting the imbalance in a wheel assembly comprises the steps:
(a) introducing into a well of a tire prior to the tire being mounted at least one pressurized sealed package containing therein a predetermined amount of a vehicle tire balancing material comprising beads formed from a first material having a lower tribo-electric work function, the beads having a permanent coating formed from a second material having a higher tribo-electric work function, .
(b) inflating the tire to a desired pressure level in such a way so as to break open the sealed package whereby the tire balancing material is released into the tire well, and
(c) setting in motion the tire whereby the released tire balancing material migrates within the inner periphery of the tire and comes to a stop on the lining of the tire at a position or positions so as to counterbalance the imbalance in the wheel assembly.

The inflation step is advantageously achieved by using an air bead blaster device.

Preferably, the package material comprises polyvinyl chloride material, cellophane material or polyethylene material.

Advantageously, the desired amount of vehicle tire balancing material is one ounce (28.35 g) of beads for every 13 pounds (5.9 kg) of weight of the tire.

Further features of the invention will be described or will become apparent in the course of the following detailed description.

### BRIEF DESCRIPTION OF DRAWINGS

In order that the invention may be more clearly understood, the preferred embodiment thereof will now be described in detail by way of example, with reference to the accompanying drawings, in which:
- Fig. 1: is a sectioned view of a coated bead according to the invention,
- Fig. 2: is a cross-sectional view of a tire with the glass beads being injected inside of the tire,
- Fig. 3: is a side view of a wheel assembly illustrating a heavy spot and the approximate location of the counterbalancing glass beads, and
- Fig. 4: is an elevational side view of a tire balancing material application bag according to the invention.

### BEST MODE FOR CARRYING OUT THE INVENTION

The accompanying drawings illustrate the invention. As is shown in Fig. 1, a balancing bead 1 according to the invention is generally spherical and has a coating 2 covering substantially all of the bead. A larger bead diameter results in a smaller ratio of surface area to total weight of the bead (with coating). Thus, a larger bead shows less cling to the tire liner than a smaller bead (with a larger ratio of surface area to weight). In a typical automobile tire application, diameters of around 45 thou (1.15 mm) have been found to be optimal. Prior art beads were seldom larger than 25 thou (0.64 mm). Better control over the clinging properties can be had by varying the bead diameter, coating thickness and coating material. It is also conceivable to use other material than glass (quartz) for the bead, but the general requirements are cost, specific weight and position in the triboelectric series for the specific material. A material that is light, but otherwise suitable, will be required in a larger volume, to balance a tire. A material that is heavy, might be prohibitively too expensive.

Suitable bead materials are glass (quartz), nylon, acetate, lead, aluminum and others who are found in the more positive end of the triboelectric series. Due to its specific weight, low cost and ease of manufacturing (also in spherical shape), glass is the preferred material for the bead.

The coating is preferably baked or hardened on, to produce a coating which is durable and crack-resistant. By baking or hardening the coating, evaporation of the coating material is largely prevented later in the tire, and the coating will better resist abrasion and centrifugal losses of material. The coating material has to be chosen for its triboelectric properties, as well as its mechanical properties. Advantageous choices for coating material has been found in the group consisting of silicone rubber, Teflon (TM), silicon, Silane, KEL F (TM), PVC (vinyl), Polypropylene, Polyethylene, Polyurethane, Saran (TM), Acrylic, Orlon (TM). Styrene, Polyester, Acetate, Rayon (TM). Possible use can also be had from metal coatings by such metals as steel, nickel, copper and brass. but the cost of producing these coatings might be prohibitive. The preferred materials for the coating are Teflon (TM), Silane and Silicone.KEL F is also known under the name CTFE (chlorotrifluoroethylene). Silane is silicon tetrahydride. Styrene is also known under the following names vinylbenzene, ethenylbenzene, cinnamene and phenylethylene. Styrene can also be used in its polystyrene form, or mixed monostyrene/polystyrene.

The coating material is either baked on the beads, for example Teflon can be baked on glass beads at approximately 350 deg. F (177 deg. C) for approximately 10 minutes. The fumes coming from the heating process are toxic, and should preferably be cleaned in scrubbers. Alternatively, a hardener can be mixed with the coating material, which is then applied to the beads and allowed to harden. This latter method can be used for Silane, for instance.

Depending upon the coating process, beads that are not spherical can be used, as long as the coated bead has taken a more spherical shape (after the coating is applied).

A mix of smaller diameter beads and larger diameter beads can be used to cover a larger tire diameter variation in the applications.

By varying the coating material and thickness, a standard size of large diameter beads may be used to balance tires of a large variety of sizes. This will cut the manufacturing costs of the balancing material, since only one size bead will be necessary to produce and stock.

Advantageously, the beads do not react to any metal or alloyed metal-wheel. The very good durability characteristics of the beads lead to little deterioration of the material into dust particles. This in turn reduces the possibility of the tire valve seat from clogging. Moreover, the present invention is environmentally friendly. Unlike some traditional lead-based balancing materials, escape or release of the beads into the environment will not be detrimental thereto.

Additionally, the bead balancing material has shock absorbing characteristics. The inventor has observed that, with the bead material installed, a noticeable reduction of vibration from the bumpy ride from a rough road or tight turns is achieved.

If the application of the beads is to be via the valve stem of a tire mounted onto a wheel, the maximum diameter for the bead is determined by the inner diameter of the valve stem (valve core removed). If beads of too large diameter are inserted, they tend to get stuck at the entrance to the valve stem (queuing problems). Thus, bead diameters of between 25 and 45 thousandths of an inch (0.64 to 1.15 mm) are preferred, but in certain special applications, larger bead diameters may be used.

With reference to Fig. 1, the tire balancing beads are preferably substantially spherical in shape. The tire balancing material **1** has beads **1'** with a coating **1".** The balancing material is initially free-flowing, and is introduced into the hollow interior of a tire 2 preferably by one of five methods.

In the first method (first embodiment of the invention), a desired amount of glass beads may be poured into the tire well before the tire is mounted onto the wheel (not shown). The tire is then inflated after mounting.

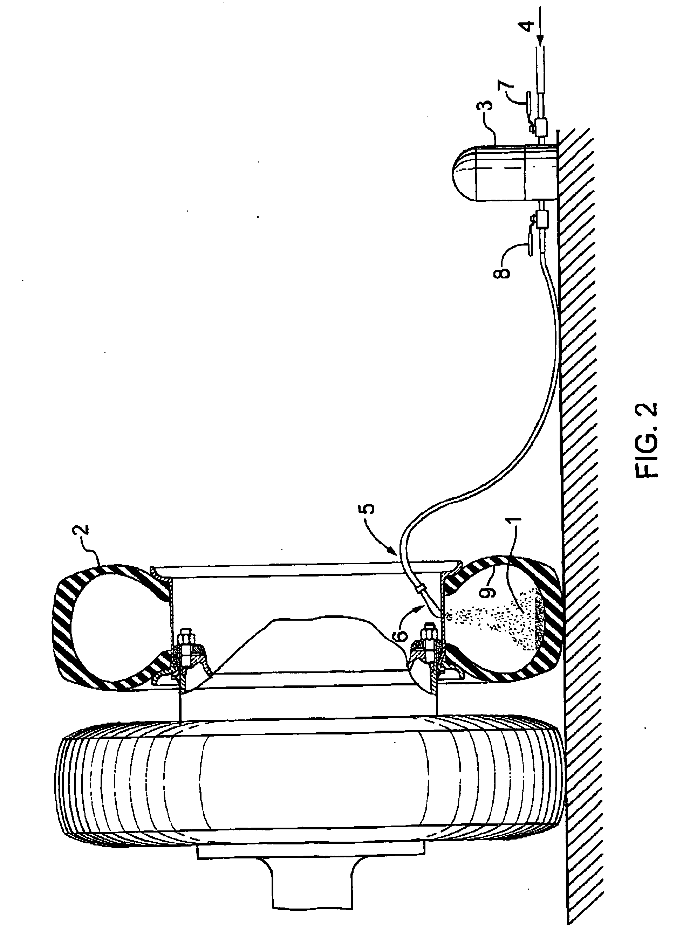

In the second method (second embodiment of the invention), as shown in Fig. **2****,** a pre-mounted tire is half deflated, and an in-line applicator **3** is filled with the desired amount of the balancing material, An air intake end **4** of the applicator is connected to a typical pressurized tire air supply. Further, an air exit 5 is connected to a tire valve **6** connector. An inlet valve **7** is next opened, thereby pressurizing the applicator. An outlet valve **8** is subsequently opened, and approximately thirty seconds later the balancing material is completely injected into the tire **9.** The in-line applicator **3** is slowly flipped upside down. The tire may then continue to be inflated to a desired tire pressure, for instance up to 150 psi (10.2 atm).

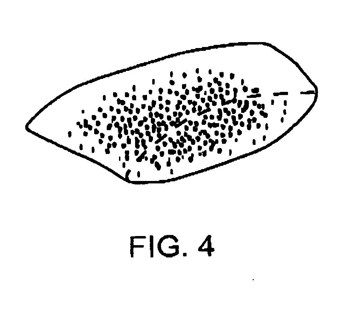

In the third, fourth, and fifth methods (third embodiment of the invention), a slightly pressurized (approximately 0.5 psi or 0.34 atm) sealed package (see Fig. 4) containing a predetermined amount of the tire balancing material is placed into the tire well/cavity of a tire prior to mounting the tire. The package is, preferably, potato chip bag-like in shape. The tire containing the package therein is then inflated to a desired pressure. Since the pressure in the inflated tire is much higher (i.e. 25 to 150 psi, or 1.7 to 10.2 atm) than the package, the package will burst or collapse under pressure and release the balancing material into the tire. To assure the collapse of the package and the release of the balancing material, rapid inflation of the tire is desired. In a preferred embodiment, an air bead blaster is utilized to pressurize and seat the tire. The bursted package and balancing material would then be forced to the inside liner of the tire through centrifugal force, as described below, as the tire begins to roll. Methods three through five are ideally suited for use in situations where there is a high volume of tires to be balanced and the completion time for installing the balancing material is important, such as in OEM assembly lines and/or where the use of air bead blaster is utilized to inflate a tire from the bead seating area of the tire. Methods three and four differ in the choice of packaging material used.

In the third method, a polyvinyl chloride package having a high contact electrification allowing it to also cling to the inside liner of the tire is used. In a preferred embodiment, the polyvinyl chloride packaging would be made from one thousandths of an inch thick material (0.025 mm). Due to the relatively high running temperature of the tire the package will eventually shrink and partly dissolve while the balancing material is still effective in balancing the tire.

In contrast, the fourth method uses a package made of cellophane, or other paper material, that eventually breaks down into a dust. This latter method is not as desirable as the third method, because as previously mentioned dust is not desirable. Dust would then call for a valve filter to be used.

In the fifth method, the packaging is made from polyethylene, preferably one thousandths of an inch (0.025 mm) in thickness. In this embodiment of the invention, the package material shrinks, and bonds to the tire lining with the combination of centripetal force and heat.

Other packaging materials would also be suitable so long as the proposed material breaks down or bonds with the lining of the tire without leaving substantial dust particles and is environmentally friendly.

The application amount of the glass beads varies according to the size of the tire. In general, for every 13 pounds (5.9 kg) of tire, 1 ounce (28.35 g) of glass beads should be introduced into the tire. A typical car tire will weigh about 30 pounds (13.6 kg) while a light truck tire will weigh 40 to 50 pounds (18.1 to 22.7 kg) and a medium truck tire will weigh about 90 to 130 pounds (40.8 to 59 kg). It should be noted that up to twice the suggested amount (or possibly more, cost permitting) may be used where necessary to balance the tires.

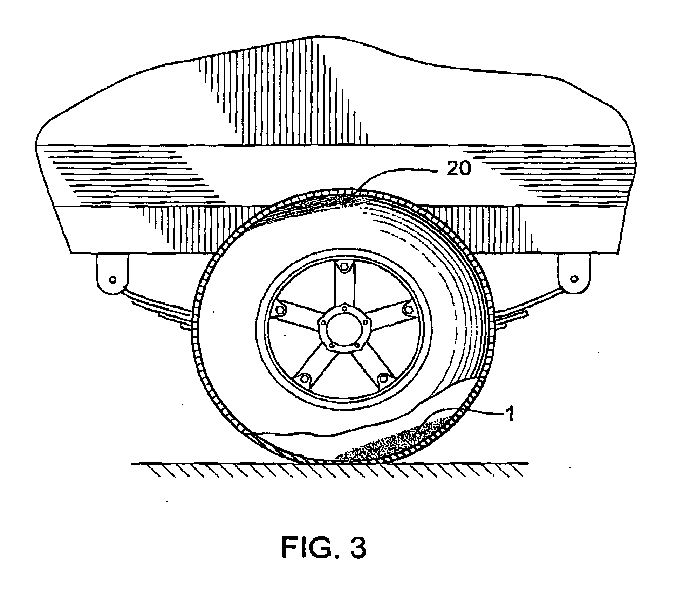

For illustrative purposes Fig. 3 shows a shaded heavy spot 20 and the approximate location of the coated beads 1 to counterbalance the imbalance in the wheel assembly. The heavy spot 20 on the wheel assembly results in a centripetal "G" force which compresses the suspension springs of the vehicle creating an up and down bouncing effect (a vibration). This constant force is enough to gradually move the beads in the opposite direction of the heavy spot through inertia until it has counteracted the imbalance and the glass beads hold their position, this latter feature is referred herein as electrostatic cling. This electrostatic cling characteristic of the glass beads constitutes a major deviation from traditional balancing materials. Traditional balancing materials, having a composition that inherently prevents electrostatic cling from occurring, remain free-flowing. In complete contrast, the present invention utilizes the electrostatic cling effect to produce some of the advantages described above that flow from this balancing material. The electrostatic cling prevents substantial wear and tear on the material by reason of it not having to continually go through re-balancing after each stopped position of the vehicle and thus provides less wear and tear on the vehicle itself, less vibration, a smoother ride resulting In a safer vehicle, and a substantially constantly balanced tire at all speeds.

It will be appreciated that the above description relates to the preferred embodiment by way of example only. Many variations on the invention will be obvious to those knowledgeable in the field, and such obvious variations are within the scope of the invention as described and claimed, whether or not expressly described.

For example, composite materials, i.e. mixes of two or more from the earlier described groups of materials, may be used as bead material, or as coating material, as long as the earlier described general requirements regarding material properties are adhered to.

### INDUSTRIAL APPLICABILITY

The invention provides an improved tire balancing material.

| **LISTING OF MATERIALS IN TRIBOELECTRIC SERIES** | |
|---|---|
| POSITIVE (+) | |
| Human hands | |
| Asbestos | |
| Rabbit fur | |
| Acetate | |
| Glass (quartz) | |
| Mica | |
| Human hair | |
| Nylon | |
| Wool | |
| Fur | |
| Lead | |
| Silk | |
| Aluminum | |
| Paper | |
| Cotton | ZERO |
| Steel | |
| Wood | |
| Amber | |
| Sealing wax | |
| Hard rubber | |
| MYLAR (TM) | |
| Nickel, Copper | |
| Brass, Silver | |
| UV resist | |
| Stainless steel | |
| Gold, Platinum | |
| Sulfur | |
| Acetate, Rayon | |
| Polyester | |
| Celluloid | |
| Styrene (styrofoam) | |
| Orlon | |
| Acrylic | |
| SARAN (TM) | |
| Polyurethane | |
| Polyethylene | |
| Polypropylene | |
| PVC (Vinyl) | |
| KEL F | |
| Silicon | |
| Silane | |
| Teflon | |
| Silicon rubber | |
| | NEGATIVE (-) |

## Claims

1. A method of balancing a vehicle tire (9), comprising the steps of:
(a) selecting beads (1') formed from
a first material having a lower tribo-electric work function than the material of said tire (9) and
coated with a second material having a higher tribo-electric work function than said first material to form a vehicle tire balancing material including coated beads;
(b) installing the coated beads (1') in the hollow interior of said tire (9);
(c) mounting said tire (9) on a rim of a wheel if not already so mounted;
(d) mounting said wheel on a vehicle if not already so mounted; and
(e) operating said vehicle to rotate said wheel, rim and tire (9) whereby said beads (1') naturally position themselves to dynamically balance the rotating wheel, rim and tire (9);
said selection of said first and second materials resulting in static charge buildup on said beads (1') when said wheel, rim and tire (9) are rotating, thereby tending to keep said beads (1') in position when rotation of said wheel, rim and tire (9) ceases.

2. A method as in claim 1, wherein said first material is selected from the group consisting of glass, nylon, acetate, lead, aluminium and steel, and said second material is selected from the group consisting of silicon rubber, silane, polytetrafluoroethylene, silicone, chlorotrifluoroethylene, polyvinylchloride, polypropylene, polyethylene, polyurethane, polyvinylidene chloride, acrylic, synthetic acrylic fiber, styrene, celluloid, polyester, acetate, synthetic cellulose fiber, steel, nickel, copper and brass.

3. A method as in claim 1, wherein said first material is glass.

4. A method as in claim 1, wherein said first material is steel.

5. A method as in any one of claims 1 to 4, wherein said second material is selected from the group consisting of silane, Teflon, and silicone.

6. A method as in claim 1, wherein said first material is glass and said second material is silicone.

7. A method as in claim 1, wherein said first material is stainless steel and said second material is polytetrafluoroethylene.

8. A method as in any one of claims 1 to 7, wherein said coated beads are placed in a breakable package prior to installing in said tire, said package material selected so as to rupture readily after inflating the tire to a desired pressure.

9. A method as in any one of claims 1 to 8, wherein said beads are in the ränge between 25 to 45 thousandths of an inch (0.64 to 1.15 mm) in diameter.

10. The method of claim 1 wherein the step of installing comprises:
(a) injecting a desired amount of the vehicle tire balancing material into the hollow interior of a stationary tire mounted to a wheel rim, and
(b) pressurizing the air in the tire to a desired level,
wherein the tire balancing material migrates within the interior of the tire and comes to a stop on the lining of the tire at a position or positions so as to counterbalance the imbalance in the wheel assembly and remaining at those positions by electrostatic cling.

11. The method of claim 10, wherein the desired amount of vehicle tire balancing material is approximately one ounce (28.35 g) of beads for every 13 pounds (5.9 kg) of weight of the tire.

12. The method of claim 1 wherein the step of installing comprises:
(a) introducing a predetermined amount of the vehicle, tire balancing material into the tire well of an unmounted stationary tire,
(b) mounting the tire, and
(c) pressurizing the air in the tire to a desired level,
whereby the tire balancing material migrates within the interior of the tire and comas to a stop on the lining of the tire at a position or positions so as to counterbalance the imbalance in the wheel assembly.

13. The method claimed in claim 12, wherein the desired amount of vehicle tire balancing material is approximately one ounce (28.35 g) of beads for every 13 pounds (6.9 kg) of weight of the tire.

14. The method of claim 1 wherein the step of installing comprises:
(a) introducing into a well of a tire prior to the tire being mounted at least one pressurized sealed package containing therein a predetermined amount of the vehicle tire balancing material and
(b) inflating the tire to a desired pressure level in such a way so as to break open said sealed package whereby said tire balancing material is released into the tire well,
whereby the released tire balancing material migrates within the inner periphery of the tire and comes to a stop on the lining of the tire at a position or positions so as to counterbalance the imbalance in the wheel assembly.

15. A method of balancing a wheel assembly as claimed in claim 14, wherein said inflation step is achieved by an air bead blaster device.

16. A method of balancing a wheel assembly as claimed in any of claims 14 or 15, wherein the package material comprises polyvinyl chloride material.

17. A method of balancing a wheel assembly as claimed in any of claims 14 or 15, wherein the package material comprises cellophane material.

18. A method of balancing a wheel assembly as claimed in any of claims 14 or 15, wherein the package material comprises polyethylene material.

19. A vehicle tire balancing material (1) comprising beads (1') formed from a first material having a lower tribo-electric work function than the tire material said beads having a permanent coating (1") formed from a second material having a higher tribo-electric work function than said first material, wherein the coated beads (1') are capable of acquiring a static electricity charge that causes clinging of the beads (1') to the tire material in a balanced condition of the tire (9), and the static electricity charge is regulateable to a given tire size and application by varying the thickness of the coating (1"), the second material and the diameter of the beads (1').

20. A balancing material as claimed in claim 19, where said first material is selected from the group of glass (quartz), nylon, acetate, lead, aluminium and steel.

21. A balancing material as claimed in claims 19 or 20 wherein said second material is selected from the group of Silicone rubber, Silene, Silane, Teflon, Silicon, KEL F, PVC, Polypropylene, Polyethylene. Polyurethane, Saran, Acrylic, Orion. Styrene, Celluloid Polyester, Acetate, Rayon, steel, nickel, copperand brass.

22. A balancing material as claimed in any of Claims 19 to 21, wherein said beads (1') are rounded and generally spherical in shape.

## Patentansprüche

1. Verfahren zum Auswuchten eines Fahrzeugreifens (9) mit den Schritten:
(a) Auswählen von Perlen (1'), welche
aus einem ersten Material mit einer geringeren reibungselektrischen Austrittsarbeit als das Material des Reifens (9) gebildet sind und
beschichtet sind mit einem zweiten Material mit einer höheren reibungselektrischen Austrittsarbeit als der des ersten Materials, um
ein Auswuchtmaterial für Fahrzeugreifen mit beschichteten Perlen zu bilden;
(b) Installieren der beschichteten Perlen (1') in den Innenhohlraum des Reifens (9);
(c) Montieren des Reifens (9) auf einer Felge eines Rades, sofern er noch nicht so montiert ist;
(d) Montieren des Rades an einem Fahrzeug, sofern es noch nicht so montiert ist; und
(e) Betreiben des Fahrzeugs, um das Rad, die Felge und den Reifen (9) zu drehen, wodurch die Perlen (1') sich von selbst positionieren, um das Rad, die Felge und den Reifen (9), die sich drehen, dynamisch auszuwuchten;
wobei die Auswahl des ersten und zweiten Materials zu einer statischen Aufladung der Perlen (1') führt, wenn das Rad, die Felge und der Reifen (9) sich drehen, wodurch die Perlen (1') zur Positionsbeibehaltung neigen, wenn die Drehung des Rads, der Felge und des Reifens (9) aufhört.

2. Verfahren nach Anspruch 1, wobei das erste Material ausgewählt wird aus der aus Glas, Nylon, Azetat, Blei, Aluminium und Stahl bestehenden Gruppe, und das zweite Material ausgewählt wird aus der aus Silikongummi, Silan, Polytetrafluorethylen, Silikon, Chlortrifluorethylen, Polyvinylchlorid, Polypropylen, Polyethylen, Polyurethan, Polyvinylidenchlorid, Acryl, synthetischer Acrylfaser, Styrol, Celluloid, Polyester, Azetat, synthetischer Cellulosefaser, Stahl, Nickel, Kupfer und Messing bestehenden Gruppe.

3. Verfahren nach Anspruch 1, wobei das erste Material Glas ist.

4. Verfahren nach Anspruch 1, wobei das erste Material Stahl ist.

5. Verfahren nach einem der Ansprüche 1 bis 4, wobei das zweite Material ausgewählt wird aus der aus Silan, Teflon und Silkon bestehenden Gruppe.

6. Verfahren nach Anspruch 1, wobei das erste Material Glas und das zweite Material Silikon ist.

7. Verfahren nach Anspruch 1, wobei das erste Material rostbeständiger Stahl und das zweite Material Polytetrafluorethylen ist.

8. Verfahren nach einem der Ansprüche 1 bis 7, wobei die beschichteten Perlen (1') vor dem Installieren im Reifen in einer zerreissbaren Verpackung angeordnet sind, wobei das Material der Verpackung derart ausgewählt ist, dass es nach Aufblasen des Reifens zu einem gewünschten Druck leicht reißt.

9. Verfahren nach einem der Ansprüche 1 bis 8, wobei der Perlendurchmesser in dem Bereich zwischen 25 bis 45 Tausendstel eines Zolls (0,64 bis 1,15mm) liegt.

10. Verfahren nach Anspruch 1, wobei der Schritt des Installierens umfasst:
(a) Einspritzen einer gewünschten Menge des Auswuchtmaterials für Fahrzeugreifen in den Innenhohlraum eines feststehenden Reifens, der an einer Felge montiert ist, und
(b) Beaufschlagen des Reifens mit einem gewünschten Luftdruck,
wobei das Auswuchtmaterial für Reifen im Inneren des Reifens wandert und an der Innenschicht des Reifens an einer Stelle oder an mehreren Stellen zum Stillstand gelangt, um so die Unwucht der Radanordnung auszugleichen, und mittels elektrostatischer Haftung an diesen Stellen verbleibt.

11. Verfahren nach Anspruch 10, wobei die gewünschte Menge an Auswuchtmaterial für Fahrzeugreifen ungefähr eine Unze (28,35g) an Perlen pro 13 Pfund (5,9kg) Gewicht des Reifens beträgt.

12. Verfahren nach Anspruch 1, wobei der Schritt des Installierens umfasst:
(a) Einführen einer vorbestimmten Menge des Auswuchtmaterials für Fahrzeugreifen in die Reifenöffnung eines feststehenden unmontierten Reifens,
(b) Montieren des Reifens, und
(c) Beaufschlagen des Reifens mit einem gewünschten Luftdruck,
wobei das Auswuchtmaterial für Reifen im Inneren des Reifens wandert und an der Innenschicht des Reifens an einer Stelle oder an mehreren Stellen zum Stillstand gelangt, um so die Unwucht der Radanordnung auszugleichen.

13. Verfahren nach Anspruch 12, wobei die gewünschte Menge an Auswuchtmaterial für Fahrzeugreifen ungefähr eine Unze (28,35g) an Perlen pro 13 Pfund (5,9kg) Gewicht des Reifens beträgt.

14. Verfahren nach Anspruch 1, wobei der Schritt des Installierens umfasst:
(a) Einführen von wenigstens einer mit Druck beaufschlagten abgedichteten Verpackung, welche eine vorbestimmte Menge des Auswuchtmaterials für Fahrzeugreifen enthält, in eine Reifenöffnung vor dem Montieren des Reifens und
(b) Aufpumpen des Reifens bis zu einem gewünschten Druck derart, dass die abgedichtete Verpackung zerreißt, wodurch das Auswuchtmaterial für Reifen in der Reifenöffnung freigesetzt wird, wobei das freigesetzte Auswuchtmaterial für Reifen im Inneren des Reifens wandert und an der Innenschicht des Reifens an einer Stelle oder an mehreren Stellen zum Stillstand gelangt, um so die Unwucht der Radanordnung auszugleichen.

15. Verfahren zum Auswuchten einer Radanordnung nach Anspruch 14, wobei der Schritt des Aufpumpens mit einem Luft-Perlen-Strahlgerät erreicht wird.

16. Verfahren zum Auswuchten einer Radanordnung nach einem der Ansprüche 14 oder 15, wobei das Verpackungsmaterial Polyvinylchlorid umfasst.

17. Verfahren zum Auswuchten einer Radanordnung nach einem der Ansprüche 14 oder 15, wobei das Verpackungsmaterial Cellophanmaterial umfasst.

18. Verfahren zum Auswuchten einer Radanordnung nach einem der Ansprüche 14 oder 15, wobei das Verpackungsmaterial Polyethylenmaterial umfasst.

19. Auswuchtmaterial (1) für Fahrzeugreifen, umfassend Perlen (1'), welche aus einem ersten Material gebildet sind, das eine geringere reibungselektrische Austrittsarbeit als das Reifenmaterial aufweist, wobei die Perlen eine aus einem zweiten Material, das eine höhere reibungselektrische Austrittsarbeit als das erste Materials aufweist, gebildete Permanentbeschichtung (1 ") aufweisen, wobei die beschichteten Perlen (1') eine statische Aufladung erlangen können, die eine Haftung der Perlen (1') an das Reifenmaterial in einem ausgewuchteten Zustand des Reifens (9) bewirkt, und wobei die statische Aufladung für eine gegebene Reifengröße und Anwendung durch Ändern der Beschichtungsdicke (1 "), des zweiten Materials und des Perlendurchmessers (1') einstellbar ist.

20. Auswuchtmaterial nach Anspruch 19, wobei das erste Material ausgewählt ist aus der Gruppe von Glas (Quartz), Nylon, Azetat, Blei, Aluminium und Stahl.

21. Auswuchtmaterial nach Anspruch 19 oder 20, wobei das zweite Material ausgewählt ist aus der Gruppe von Silikongummi, Silen, Silan, Teflon, Silizium, KEL F, PVC, Polypropylen, Polyethylen, Polyurethan, Saran, Acryl, Orion. Styrol, Celluloid, Polyester, Azetat, Rayon, Stahl, Nickel, Kupfer und Messing.

22. Auswuchtmaterial nach einem der Ansprüche 19 bis 21, wobei die Perlen (1') gerundet und im Wesentlichen kugelförmig sind.

## Revendications

1. Procédé d'équilibrage d'un pneu de véhicule (9), comprenant les étapes consistant à:
(a) sélectionner des billes (1')
constituées d'un premier matériau doté d'une fonction de travail triboélectrique inférieure à celle du matériau dudit pneu (9) et
revêtues d'un deuxième matériau doté d'une fonction de travail triboélectrique supérieure à celle dudit premier matériau pour former un matériau d'équilibrage de pneu de véhicule comprenant des billes revêtues ;
(b) poser les billes revêtues (1') dans la partie intérieure creuse dudit pneu (9) ;
(c) monter ledit pneu (9) sur la jante d'une roue s'il n'est pas déjà monté ;
(d) monter ladite roue sur un véhicule si elle n'est pas déjà montée ; et
(e) mettre le véhicule en marche de manière à ce qu'il fasse tourner ladite roue, ladite jante et ledit pneu (9), moyennant quoi lesdites billes (1') se positionnent naturellement d'elles-mêmes pour équilibrer de manière dynamique la roue, la jante et le pneu (9) en rotation ;
ladite sélection desdits premier et deuxième matériaux entraînant une accumulation de charge statique sur lesdites billes (1') lorsque ladite roue, ladite jante et ledit pneu (9) sont en rotation, et tendant ainsi à maintenir lesdites billes (1') en place lorsque la rotation de ladite roue, de ladite jante et dudit pneu (9) cesse.

2. Procédé selon la revendication 1, dans lequel ledit premier matériau est choisi dans le groupe constitué par le verre, le nylon, l'acétate, le plomb, l'aluminium et l'acier, et ledit deuxième matériau est choisi dans le groupe constitué par le caoutchouc de silicium, le silane, le polytétrafluoroéthylène, la silicone, le chlorotrifluoroéthylène, le chlorure de polyvinyle, le polypropylène, le polyéthylène, le polyuréthane, le chlorure de polyvinylidène, l'acrylique, la fibre acrylique synthétique, le styrène, le celluloïd, le polyester, l'acétate, la fibre de cellulose synthétique, l'acier, le nickel, le cuivre et le laiton.

3. Procédé selon la revendication 1, dans lequel ledit premier matériau est du verre.

4. Procédé selon la revendication 1, dans lequel ledit premier matériau est de l'acier.

5. Procédé selon l'une quelconque des revendications 1 à 4, dans lequel ledit deuxième matériau est choisi dans le groupe constitué par le silane, le Teflon et la silicone.

6. Procédé selon la revendication 1, dans lequel ledit premier matériau est du verre et ledit deuxième matériau est de la silicone.

7. Procédé selon la revendication 1, dans lequel ledit premier matériau est de l'acier inoxydable et ledit deuxième matériau est du polytétrafluoroéthylène.

8. Procédé selon l'une quelconque des revendications 1 à 7, dans lequel lesdites billes revêtues sont placées dans un emballage frangible avant la pose dans ledit pneu, ledit matériau de l'emballage étant choisi de manière à se rompre facilement après gonflage du pneu à une pression souhaitée.

9. Procédé selon l'une quelconque des revendications 1 à 8, dans lequel lesdites billes ont un diamètre compris dans l'intervalle de 25 à 45 millièmes de pouce (de 0,64 à 1,15 mm).

10. Procédé selon la revendication 1 dans lequel l'étape de pose comprend:
(a) l'injection d'une quantité souhaitée du matériau d'équilibrage de pneu de véhicule dans la partie intérieure creuse d'un pneu stationnaire monté sur une jante, et
(b) la pressurisation de l'air dans le pneu à un niveau souhaité,
dans lequel le matériau d'équilibrage de pneu migre à l'intérieur du pneu et s'arrête sur le revêtement du pneu à un emplacement ou à des emplacements adéquats pour contrebalancer le déséquilibre dans l'ensemble formant roue et restant à ces emplacements par attraction électrostatique.

11. Procédé selon la revendication 10, dans lequel la quantité souhaitée de matériau d'équilibrage de pneu de véhicule est d'environ une once (28,35 g) de billes pour chaque tranche de poids du pneu de 13 livres (5,9 kg).

12. Procédé selon la revendication 1 dans lequel l'étape de pose comprend :
(a) l'introduction d'une quantité prédéterminée du matériau d'équilibrage de pneu de véhicule dans la gorge d'un pneu stationnaire non monté,
(b) le montage du pneu, et
(c) la pressurisation de l'air à l'intérieur du pneu à un niveau souhaité,
moyennant quoi le matériau d'équilibrage de pneu migre à l'intérieur du pneu et s'arrête sur le revêtement du pneu à un emplacement ou à des emplacements adéquats pour contrebalancer le déséquilibre dans l'ensemble formant roue.

13. Procédé selon la revendication 12, dans lequel la quantité souhaitée de matériau d'équilibrage de pneu de véhicule est d'environ une once (28,35 g) de billes pour chaque tranche de poids du pneu de 13 livres (5,9 kg).

14. Procédé selon la revendication 1 dans lequel l'étape de pose comprend :
(a) l'introduction dans la gorge d'un pneu, avant le montage du pneu, d'au moins un emballage fermé hermétiquement et sous pression contenant une quantité prédéterminée du matériau d'équilibrage de pneu de véhicule, et
(b) le gonflage du pneu à un niveau de pression souhaité de manière à rompre ledit emballage fermé hermétiquement, moyennant quoi ledit matériau d'équilibrage de pneu est libéré dans la gorge du pneu,
moyennant quoi le matériau d'équilibrage de pneu libéré migre à l'intérieur de la périphérie interne du pneu et s'arrête sur le revêtement du pneu à un emplacement ou à des emplacements adéquats pour contrebalancer le déséquilibre dans l'ensemble formant roue.

15. Procédé d'équilibrage d'un ensemble formant roue selon la revendication 14, dans lequel ladite étape de gonflage est effectuée par un canon à air.

16. Procédé d'équilibrage d'un ensemble formant roue selon l'une quelconque des revendications 14 ou 15, dans lequel le matériau de l'emballage comprend un matériau de type chlorure de polyvinyle.

17. Procédé d'équilibrage d'un ensemble formant roue selon l'une quelconque des revendications 14 ou 15, dans lequel le matériau de l'emballage comprendre un matériau de type cellophane.

18. Procédé d'équilibrage d'un ensemble formant roue selon l'une quelconque des revendications 14 ou 15,
dans lequel le matériau de l'emballage comprend un matériau de type polyéthylène.

19. Matériau d'équilibrage de pneu de véhicule (1) comprenant des billes (1') constituées d'un premier matériau doté d'une fonction de travail triboélectrique inférieure à celle du matériau du pneu, lesdites billes présentant un revêtement permanent (1") constitué d'un deuxième matériau doté d'une fonction de travail triboélectrique supérieure à celle dudit premier matériau, dans lequel les billes revêtues (1') sont capables d'acquérir une charge d'électricité statique qui provoque l'attraction des billes (1') sur le matériau du pneu dans un état équilibré du pneu (9), et la charge d'électricité statique peut être ajustée en fonction de la taille du pneu et de l'application données en faisant varier l'épaisseur du revêtement (1"), le deuxième matériau et le diamètre des billes (1').

20. Matériau d'équilibrage selon la revendication 19, où ledit premier matériau est choisi dans le groupe constitué par le verre (quartz), le nylon, l'acétate, le plomb, l'aluminium et l'acier.

21. Matériau selon les revendications 19 ou 20 dans lequel ledit deuxième matériau est choisi dans le groupe constitué par le Caoutchouc de silicone, le Silène, le Silane, le Teflon, le Silicium, le KEL F, le PVC, le Polypropylène, le Polyéthylène, le Polyuréthane, le Saran, l'Acrylique, l'Orion, le Styrène, le Celluloïd, le Polyester, l'Acétate, la Rayonne, l'acier, le nickel, le cuivre et le laiton.

22. Matériau d'équilibrage selon l'une quelconque des revendications 19 à 21, dans lequel lesdites billes (1') sont arrondies et de forme globalement sphérique.
